# EUROPEAN PATENT APPLICATION

(11) **EP 4 613 580 A1**
(43) Date of publication of application: **10.09.2025**
(21) Application number: 23884300.7
(22) Date of filing: 18.07.2023
(51) Int. Cl.: B60T 13/12, B60T 13/16, B60T 13/74

(54) **VEHICLE BRAKE SYSTEM AND VEHICLE HAVING SAME**

(30) Priority: 31.10.2022 CN 202222887961 U
(71) Applicant: BYD Company Limited, Shenzhen, Guangdong 518118 (CN)
(72) Inventor: LI, Bingge, Shenzhen, Guangdong 518118 (CN); XU, Jiandong, Shenzhen, Guangdong 518118 (CN); YAO, Yugang, Shenzhen, Guangdong 518118 (CN); LV, Dandan, Shenzhen, Guangdong 518118 (CN); LI, Yihui, Shenzhen, Guangdong 518118 (CN)
(74) Representative: Mathys & Squire
(86) International application number: PCT/CN2023/107879
(87) International publication number: WO 2024/093361

(57) **Abstract**

A vehicle (1000), comprising a vehicle brake system (1), which comprises a brake fluid control assembly (100) and a brake master cylinder assembly (200), wherein the brake fluid control assembly (100) comprises an oil path block (110) and a pressure build-up device (120), the pressure build-up device (120) being mounted to the oil path block (110); the brake master cylinder assembly (200) is in communication with the oil path block (110), and both the brake master cylinder assembly (200) and the pressure build-up device (120) can drive brake fluid to be output via the oil path block (110); and the central axis of the brake master cylinder assembly (200) is at a non-perpendicular angle to the axis in the movement direction of a piston of the pressure build-up device (120). The vehicle brake system has advantages such as a short pipeline length, low resistance to the brake fluid flow, and minimal space requirements for arrangement.

## Description

### CROSS-REFERENCE TO RELATED APPLICATIONS

The present disclosure claims priority to Chinese Patent Application No. 202222887961.1, entitled "VEHICLE BRAKE SYSTEM AND VEHICLE HAVING SAME" and filed on October 31, 2022. The entire content of the above-referenced application is incorporated herein by reference.

### FIELD

The present disclosure relates to the technical field of vehicle brakes, and more specifically, to a vehicle brake system and a vehicle having same.

### BACKGROUND

A vehicle brake system in the related art includes a brake master cylinder assembly and a piston pump. The arrangement space is large because the brake master cylinder assembly and the piston pump are generally arranged perpendicular to each other.

### SUMMARY

The present disclosure aims to resolve at least one of the technical problems in the related art. In view of the above, an objective of the present disclosure is to provide a vehicle brake system. The vehicle brake system has advantages such as a short pipeline length, low resistance to brake fluid flow, and minimal space required for arrangement.

The present disclosure further provides a vehicle having the above vehicle brake system.

In order to achieve the above objective, in a first aspect, a vehicle brake system is provided according to embodiments of the present disclosure. The system includes: a brake fluid control assembly, the brake fluid control assembly including a manifold block and a pressure build-up device, and the pressure build-up device being mounted on the manifold block; and a brake master cylinder assembly, the brake master cylinder assembly being in communication with the manifold block, and both the brake master cylinder assembly and the pressure build-up device driving brake fluid to be output via the manifold block; where a central axis of the brake master cylinder assembly is arranged at a non-perpendicular angle to an axis along a movement direction of a piston of the pressure build-up device.

The vehicle brake system according to the embodiment of the present disclosure has advantages such as a short pipeline length, low resistance to the brake fluid flow, and minimal space required for arrangement.

According to some embodiments of the present disclosure, the central axis of the brake master cylinder assembly is parallel to or coincides with the axis along the movement direction of the piston of the pressure build-up device.

According to some embodiments of the present disclosure, the brake master cylinder assembly and the brake fluid control assembly are spaced apart along a predetermined direction, and the predetermined direction is perpendicular to the central axis of the brake master cylinder assembly and the axis along the movement direction of the piston of the pressure build-up device.

According to some embodiments of the present disclosure, the axis along the movement direction of the piston of the pressure build-up device is arranged parallel to a thickness direction of the manifold block.

According to some embodiments of the present disclosure, the brake master cylinder assembly and the brake fluid control assembly are arranged in a split configuration.

According to some embodiments of the present disclosure, the vehicle brake system further includes: a brake pedal, the brake pedal being in transmission connection to the brake master cylinder assembly; a sensor, the sensor being electrically connected to the pressure build-up device, and the sensor being configured to detect a movement change of the brake pedal; and a brake wheel cylinder, the brake wheel cylinder being in communication with the manifold block, and the brake wheel cylinder being configured to receive the brake fluid output by the manifold block.

According to some embodiments of the present disclosure, the brake fluid control assembly further includes: an electric control device. The electric control device is mounted on the manifold block. The electric control device is provided with a control valve, and the sensor is electrically connected to the pressure build-up device through the control valve. The control valve controls whether the pressure build-up device drives the brake fluid to be output via the manifold block according to a detection signal of the sensor.

According to some embodiments of the present disclosure, the brake fluid control assembly further includes: an oil supply device. The oil supply device is mounted on a top surface of the manifold block and configured to supply the brake fluid to the pressure build-up device. A bottom surface of the manifold block is suitable for being connected to a vehicle body of a vehicle.

According to some embodiments of the present disclosure, the vehicle brake system further includes: a connection oil pipe. The manifold block is provided with a fluid inlet. The brake master cylinder assembly is provided with a first fluid outlet. The connection oil pipe is in communication with the fluid inlet and the first fluid outlet separately. The fluid inlet is arranged on a side surface of the manifold block.

According to some embodiments of the present disclosure, the first fluid outlet is arranged on a circumferential surface of the brake master cylinder assembly, and the first fluid outlet is located on one side of the brake master cylinder assembly facing the brake fluid control assembly.

According to some embodiments of the present disclosure, both the central axis of the brake master cylinder assembly and the axis along the movement direction of the piston of the pressure build-up device extend along a length direction of the vehicle body of the vehicle; the brake master cylinder assembly and the brake fluid control assembly are distributed along a width direction of the vehicle body; or, the brake master cylinder assembly and the brake fluid control assembly are distributed along a height direction of the vehicle body, and the brake master cylinder assembly is located directly above the brake fluid control assembly.

According to some embodiments of the present disclosure, the manifold block is provided with a second fluid outlet, and the second fluid outlet is in communication with the fluid inlet. A central axis of the second fluid outlet is arranged parallel to the axis along the movement direction of the piston of the pressure build-up device.

According to some embodiments of the present disclosure, the pressure build-up device is a piston pump. The piston pump is provided with a motor, and the motor is mounted on the manifold block. The motor and the second fluid outlet are located on a same side surface of the manifold block.

According to some embodiments of the present disclosure, the brake fluid control assembly further includes: the electric control device, the electric control device being mounted on the manifold block, the electric control device and the motor being arranged on two opposite sides of the manifold block respectively, and the electric control device being connected to the piston pump.

In a second aspect, a vehicle is provided according to the embodiments of the present disclosure. The vehicle includes the vehicle brake system according to the embodiments in the first aspect of the present disclosure.

The vehicle according to the embodiments in the second aspect of the present disclosure uses the vehicle brake system according to the embodiments in the first aspect of the present disclosure, and thus has advantages such as a short pipeline length, low resistance to brake fluid flow, and minimal space required for arrangement.

Additional aspects and advantages of the present disclosure will be set forth in part in the following description, and in part will become apparent from the following description, or will be learned by practice of the present disclosure.

### BRIEF DESCRIPTION OF THE DRAWINGS

The above and/or additional aspects and advantages of the present disclosure will become apparent and comprehensible in the description of embodiments made with reference to the following accompanying drawings.
FIG. 1 is a schematic structural diagram of a vehicle brake system according to an embodiment of the present disclosure;
FIG. 2 is a schematic structural diagram of a vehicle brake system in another view according to an embodiment of the present disclosure;
FIG. 3 is a schematic structural diagram of a vehicle brake system in yet another view according to an embodiment of the present disclosure;
FIG. 4 is a schematic block diagram of a vehicle brake system according to an embodiment of the present disclosure; and
FIG. 5 is a schematic block diagram of a vehicle according to an embodiment of the present disclosure.

In the drawings:
vehicle brake system 1, vehicle 1000
brake fluid control assembly 100, manifold block 110, fluid inlet 111, second fluid outlet 112, pressure build-up device 120, motor 121, electric control device 130, oil supply device 140,
brake master cylinder assembly 200, first fluid outlet 210,
connection oil pipe 300, and transverse beam 400.

### DETAILED DESCRIPTION

Embodiments described with reference to the accompanying drawings are illustrative, and the embodiments of the present disclosure are described in detail below.

In the description of the present disclosure, it should be understood that orientation or position relations indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relations shown in the accompanying drawings, and are used only for ease and brevity of the description of the present disclosure, rather than indicating or implying that the mentioned device or component must have a particular orientation or must be arranged and operated in a particular orientation. Thus, such terms should not be interpreted as limiting the present disclosure.

In the description of the present disclosure, "a plurality of" means two or more.

A vehicle brake system 1 according to the embodiments of the present disclosure is described below with reference to the accompanying drawings.

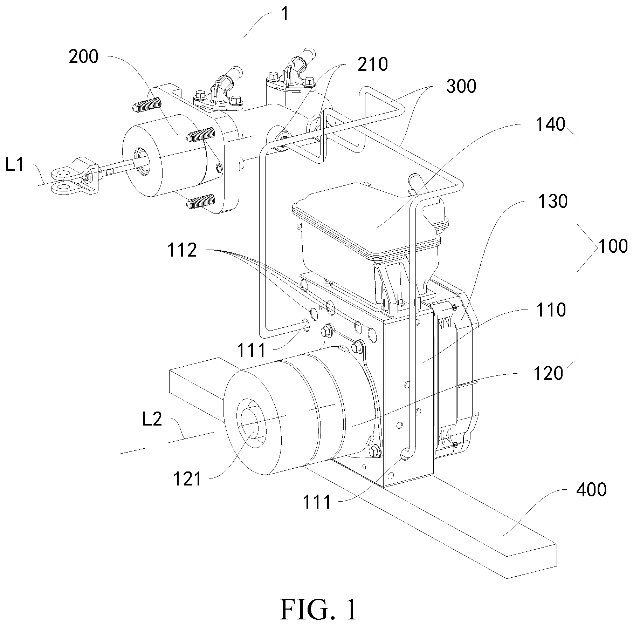

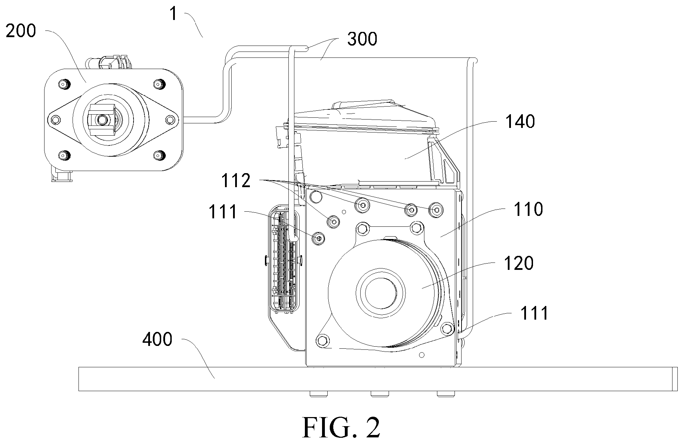

As shown in FIG. 1 to FIG. 4, the vehicle brake system 1 according to the embodiments of the present disclosure includes a brake fluid control assembly 100 and a brake master cylinder assembly 200.

The brake fluid control assembly 100 includes a manifold block 110 and a pressure build-up device 120. The pressure build-up device 120 is mounted on the manifold block 110, the brake master cylinder assembly 200 is in communication with the manifold block 110, and both the brake master cylinder assembly 200 and the pressure build-up device 120 can drive brake fluid to be output via the manifold block 110. A central axis L1 of the brake master cylinder assembly 200 is arranged at a non-perpendicular angle to an axis L2 along a movement direction of a piston of the pressure build-up device 120.

For example, the vehicle brake system 1 may include a brake pedal 500, a sensor 600, and a brake wheel cylinder 700. The brake pedal 500 is in transmission connection to the brake master cylinder assembly 200. The sensor 600 is electrically connected to the pressure build-up device 120. The sensor 600 is configured to detect a movement change of the brake pedal 500. The brake wheel cylinder 700 is in communication with the manifold block 110. The brake wheel cylinder 700 is configured to receive the brake fluid output by the manifold block 110.

When the brake pedal 500 is pressed down, the sensor 600 may detect a displacement change or an angle change of the brake pedal 500. For example, the sensor 600 may be a displacement sensor or an angle sensor. Then, the sensor 600 transmits an electrical signal to the pressure build-up device 120, so as to control the pressure build-up device 120 to build up pressure. Thus, the brake fluid is pressed into the brake wheel cylinder 700, so that the brake wheel cylinder 700 brakes the wheels.

When the brake pedal 500 is pressed down, if the vehicle brake system 1 is not energized, the sensor 600 is damaged, the pressure build-up device 120 is damaged, or the pressure build-up device 120 cannot build up the pressure, a piston of the brake master cylinder assembly 200 is pushed by the brake pedal 500. The brake master cylinder assembly 200 presses the brake fluid into the brake wheel cylinder 700, so that the brake wheel cylinder 700 brakes the wheels.

In this way, the vehicle brake system 1 has two brake manners: In one manner, braking is performed in a manner of pure mechanical control through the brake master cylinder assembly 200. In the other manner, braking is performed in a manner of combining mechanical control and electric control through the cooperation between the pressure build-up device 120 and the sensor 600. Thus, the brake accuracy and reliability of the vehicle brake system 1 can be ensured.

In the vehicle brake system 1 according to the embodiments of the present disclosure, the brake fluid control assembly 100 is configured to include the manifold block 110 and the pressure build-up device 120. The pressure build-up device 120 is mounted on the manifold block 110, the brake master cylinder assembly 200 is in communication with the manifold block 110, and both the brake master cylinder assembly 200 and the pressure build-up device 120 can drive the brake fluid to be output via the manifold block 110. In other words, the brake master cylinder assembly 200 can independently drive the brake fluid to be output via the manifold block 110. The pressure build-up device 120 can independently drive the brake fluid to be output via the manifold block 110. Alternatively, the brake master cylinder assembly 200 and the pressure build-up device 120 can independently drive the brake fluid to be output via the manifold block 110.

An oil path may be arranged in the manifold block 110, and the oil path is in communication with the pressure build-up device 120, the brake master cylinder assembly 200, and the brake wheel cylinder 700 separately. Thus, both the pressure build-up device 120 and the brake master cylinder assembly 200 can output the brake fluid to the brake wheel cylinder 700 via the manifold block 110. Both the pressure build-up device 120 and the brake master cylinder assembly 200 use the oil path in the manifold block 110. Thus, an integration degree of the oil path of the vehicle brake system 1 can be improved, and space occupation and processing complexity of the vehicle brake system 1 can be reduced.

Also, the central axis L1 of the brake master cylinder assembly 200 is arranged at a non-perpendicular angle to the axis L2 along the movement direction of the pressure build-up device 120. In this way, compared with a vehicle brake system 1 in the related art that a central axis of a brake master cylinder assembly is arranged perpendicular to an axis along a movement direction of the pressure build-up device, the brake master cylinder assembly 200 and the brake fluid control assembly 100 in the embodiments of the present disclosure can be closer to each other. Thus, length of a pipeline between the brake master cylinder assembly 200 and the brake fluid control assembly 100 is reduced, and entire space occupation by the brake master cylinder assembly 200 and the brake fluid control assembly 100 is reduced accordingly, so that space utilization of the vehicle is improved.

Moreover, when braking is performed by the brake master cylinder assembly 200, since the length of the pipeline between the brake master cylinder assembly 200 and the brake fluid control assembly 100 is reduced, the resistance to flow of the brake fluid between the brake master cylinder assembly 200 and the brake fluid control assembly 100 is reduced, the braking speed is correspondingly faster, and the braking effect is better.

Thus, the vehicle brake system 1 according to the embodiments of the present disclosure has advantages such as a short pipeline length, low resistance to the brake fluid flow, and minimal space required for arrangement.

According to some specific embodiments of the present disclosure, as shown in FIG. 1 to FIG. 3, the central axis L1 of the brake master cylinder assembly 200 is parallel to or coincides with the axis L2 along the movement direction of the piston of the pressure build-up device 120.

In this way, the brake master cylinder assembly 200 may be further close to the brake fluid control assembly 100. Thus, the length of the pipeline between the brake master cylinder assembly 200 and the brake fluid control assembly 100 is further reduced, the entire space occupation by the brake master cylinder assembly 200 and the brake fluid control assembly 100 is further reduced, and the space utilization of the vehicle is further improved.

Moreover, when braking is performed by the brake master cylinder assembly 200, since the length of the pipeline between the brake master cylinder assembly 200 and the brake fluid control assembly 100 is further reduced, the resistance to flow of the brake fluid between the brake master cylinder assembly 200 and the brake fluid control assembly 100 is further reduced, the braking speed is further increased, and the braking effect is better.

According to some specific embodiments of the present disclosure, as shown in FIG. 1 to FIG. 3, the brake master cylinder assembly 200 and the brake fluid control assembly 100 are spaced apart along a predetermined direction. The predetermined direction is perpendicular to the central axis L1 of the brake master cylinder assembly 200 and the axis L2 along the movement direction of the piston of the pressure build-up device 120.

In this way, the brake master cylinder assembly 200 and the brake fluid control assembly 100 are arranged along a radial direction of the central axis L1 of the brake master cylinder assembly 200 (i.e. a radial direction of the axis L2 along the movement direction of the piston of the pressure build-up device 120). In other words, the brake master cylinder assembly 200 and the brake fluid control assembly 100 can be prevented from being arranged along an axial direction of the central axis L1 of the brake master cylinder assembly 200 (i.e. an axial direction of the axis L2 along the movement direction of the piston of the pressure build-up device 120). Thus, an objective of reducing a distance between the brake master cylinder assembly 200 and the brake fluid control assembly 100 can be achieved, and an increase in a size of the vehicle brake system 1 along the axial direction of the central axis L1 of the brake master cylinder assembly 200 can be avoided. Further, space occupation by the vehicle brake system 1 in the axial direction of the central axis L 1 of the brake master cylinder assembly 200 can be reduced.

According to some specific embodiments of the present disclosure, as shown in FIG. 1 to FIG. 3, the axis L2 along the movement direction of the piston of the pressure build-up device 120 is arranged parallel to a thickness direction of the manifold block 110. In this way, a size of the brake fluid control assembly 100 along the axial direction of the central axis L2 of the pressure build-up device 120 is reduced, and space occupation by the brake fluid control assembly 100 along the axial direction of the axis L2 along the movement direction of the piston of the pressure build-up device 120 is also reduced. Thus, the vehicle brake system 1 is miniaturized.

According to some specific embodiments of the present disclosure, as shown in FIG. 1 to FIG. 3, the brake master cylinder assembly 200 and the brake fluid control assembly 100 are arranged in a spit manner. In the embodiment, in a case that the brake master cylinder assembly 200 and the brake fluid control assembly 100 are arranged in a split configuration, the brake master cylinder assembly 200 and the brake fluid control assembly 100 are separated and mounted independently. In another embodiment, in a case that the brake master cylinder assembly 200 and the brake fluid control assembly 100 are arranged in a split configuration, a cylinder body of the brake master cylinder assembly 200 and a body of the manifold block 110 are not connected integrally. In this case, the brake master cylinder assembly 200 is detachably mounted on the brake fluid control assembly 100 through threaded connection, etc. The brake master cylinder assembly 200 includes the cylinder body and the piston located in the cylinder body. Movement of the piston in the cylinder body drives the brake fluid to flow.

In this way, compared with the vehicle brake system in the related art that the brake master cylinder assembly and the brake fluid control assembly are mounted integrally, the brake master cylinder assembly 200 and the brake fluid control assembly 100 of the vehicle brake system 1 in the embodiments of the present disclosure are separately arranged. Thus, arrangement positions and mounting methods can be more flexible, and the space utilization can be improved. Moreover, disassembly and assembly are convenient, and the brake master cylinder assembly 200 and the brake fluid control assembly 100 do not need to separately occupy large space.

According to some specific embodiments of the present disclosure, as shown in FIG. 1 to FIG. 3, the brake fluid control assembly 100 further includes an electric control device 130.

The electric control device 130 is mounted on the manifold block 110. The electric control device 130 is provided with a control valve 1301. The sensor 600 is electrically connected to the pressure build-up device 120 through the control valve 1301. The control valve 1301 controls whether the pressure build-up device 120 drives the brake fluid to be output via the manifold block 110 according to a detection signal of the sensor 600. The control valve 1301 may be a solenoid valve.

By arranging the electric control device 130, the electric control device 130 may be connected to the sensor 600, so as to obtain an electrical signal fed back by the sensor 600. The electric control device 130 may calculate a displacement distance or a rotation angle of the brake pedal 500 according to the electrical signal fed back by the sensor 600. Thus, pressure of the pressure build-up device 120 can be accurately controlled, so that a brake force of the vehicle is matched with a brake force required by a driver, and brake experience is improved.

According to some specific embodiments of the present disclosure, as shown in FIG. 1 to FIG. 3, the vehicle brake system 1 further includes an oil supply device 140. The oil supply device 140 is a device that can supply the brake fluid. In the embodiment, the oil supply device 140 is an oil storage device (for example, an oil kettle). Flow power of the brake fluid is sourced from an action of the piston of the brake master cylinder assembly 200, or an action of piston of the pressure build-up device 120. In another embodiment, the oil supply device 140 may include an oil storage device (for example, an oil kettle) and a power device that assists in supplying fluid power to the oil storage device. The oil supply device 140 is mounted on a top surface of the manifold block 110, and is configured to supply the brake fluid to the pressure build-up device 120. A bottom surface of the manifold block 110 is suitable for being connected to a vehicle body. The bottom surface of the manifold block 110 may be mounted on a transverse beam 400 of a front cabin.

In this way, the transverse beam 400 of the front cabin may support the manifold block 110. The manifold block 110 does not need to be suspended in the front cabin. Moreover, it is unnecessary to additionally arrange a bracket for supporting the manifold block 110. The manifold block 110 is mounted stably, and the space occupation is reduced. By arranging the oil supply device 140, the brake fluid can be supplied to the pressure build-up device 120, so as to facilitate repeated use of the pressure build-up device 120 and prepare for next pressure build-up for a brake of the pressure build-up device 120. The oil supply device 140 and the brake master cylinder assembly 200 may be connected to a same oil kettle. Alternatively, the oil supply device 140 and the brake master cylinder assembly 200 may be connected to different oil kettles. Alternatively, the oil supply device 140 is the oil kettle, and directly supplies the brake fluid to the brake master cylinder assembly 200 and the pressure build-up device 120. Moreover, the oil supply device 140 is mounted on the top surface of the manifold block 110. The manifold block 110 can support the oil supply device 140. Also, the oil supply device 140 does not interfere with the transverse beam of the front cabin and the pressure build-up device 120. Thus, the brake fluid control assembly 100 is more convenient to arrange, and the brake fluid in the oil supply device 140 can more easily flow into the pressure build-up device 120 under the effect of gravity.

According to some specific embodiments of the present disclosure, as shown in FIG. 1 to FIG. 3, a vehicle brake system 1 further includes a connection oil pipe 300. The manifold block 110 is provided with a fluid inlet 111, the brake master cylinder assembly 200 is provided with a first fluid outlet 210, and the connection oil pipe 300 is in communication with the fluid inlet 111 and the first fluid outlet 210 separately. The fluid inlet 111 is arranged on a side surface of the manifold block 110.

For example, a plurality of connection oil pipes 300 may be provided. The plurality of connection oil pipes 300 may be connected to different side surfaces of the manifold block 110. The plurality of connection oil pipes 300 or may be connected to a same side surface of the manifold block 110. The oil supply device 140 is arranged on the top surface of the manifold block 110, and the bottom surface of the manifold block 110 is connected to the vehicle body. Thus, length of the connection oil pipe 300 can be reduced by connecting the connection oil pipe 300 to the side surface of the manifold block 110, and an entire size of the vehicle brake system 1 can be reduced. Moreover, the connection oil pipe 300 is less likely to interfere with the vehicle body.

According to some specific embodiments of the present disclosure, as shown in FIG. 1 to FIG. 3, the first fluid outlet 210 is arranged on a circumferential surface of the brake master cylinder assembly 200, and the first fluid outlet 210 is located on one side of the brake master cylinder assembly 200 facing the brake fluid control assembly 100.

In this way, a distance between the first fluid outlet 210 and the manifold block 110 is smaller, so that the length of the connection oil pipe 300 can be reduced. Moreover, since the length of the connection oil pipe 300 is reduced, resistance to flow of the brake fluid in the connection oil pipe 300 can be correspondingly reduced.

According to some specific embodiments of the present disclosure, as shown in FIG. 1 to FIG. 3, both the central axis L1 of the brake master cylinder assembly 200 and the axis L2 along the movement direction of the piston of the pressure build-up device 120 extend along a length direction (i.e. a front-rear direction) of the vehicle body of the vehicle. The vehicle body has the largest spatial size along the length direction. Thus, space of the vehicle body along the length direction can be more fully used, and space utilization can be improved after both the central axis L1 of the brake master cylinder assembly 200 and the axis L2 along the movement direction of the piston of the pressure build-up device 120 extend along the length direction of the vehicle body.

Moreover, the brake master cylinder assembly 200 and the brake fluid control assembly 100 are distributed along a width direction (i.e. a left-right direction) of the vehicle body. Alternatively, the brake master cylinder assembly 200 and the brake fluid control assembly 100 are distributed along a height direction (i.e. an up-down direction) of the vehicle body, and the brake master cylinder assembly 200 is located directly above the brake fluid control assembly 100.

In this way, arrangement methods are more diversified, so that the present disclosure can better adapt to the shape of front cabin in different vehicles, offering a wider range of applicability.

According to some specific embodiments of the present disclosure, as shown in FIG. 1 to FIG. 3, the manifold block 110 is provided with a second fluid outlet 112, and the second fluid outlet 112 is in communication with the fluid inlet 111. A central axis of the second fluid outlet 112 is arranged parallel to the axis L2 along the movement direction of the piston of the pressure build-up device 120, where the manifold block 110 is in communication with the brake wheel cylinder 700 through the second fluid outlet 112.

In this way, when performed by the brake master cylinder assembly 200, the braking speed is correspondingly faster, the braking response speed is increased, and drive safety of the vehicle is higher.

According to some specific embodiments of the present disclosure, as shown in FIG. 1 to FIG. 3, the pressure build-up device 120 is a piston pump. The piston pump is provided with a motor 121, the motor 121 is mounted on the manifold block 110, and the motor 121 and the second fluid outlet 112 are located on a same side surface of the manifold block 110.

The movement direction of the piston of the pressure build-up device 120 is identical to the thickness direction of the manifold block 110. Thus, the motor 121 is mounted on one side surface, along the thickness direction, of the manifold block 110. A surface area of the side surface, for mounting the motor 121, of the manifold block 110 is larger. By locating the motor 121 and the second fluid outlet 112 on the same side surface of the manifold block 110, the side surface, for mounting the motor 121, of the manifold block 110 can be better utilized. Moreover, it can be ensured that the central axis of the second fluid outlet 112 is arranged parallel to the axis L2 along the movement direction of the piston of the pressure build-up device 120.

According to some specific embodiments of the present disclosure, as shown in FIG. 1 to FIG. 3, the brake fluid control assembly 100 further includes the electric control device 130. The electric control device 130 is mounted on the manifold block 110. The electric control device and the motor 121 are arranged on two opposite sides of the manifold block 110 respectively. The electric control device 130 is connected to the piston pump.

**In** this way, the electric control device 130 and the motor 121 are arranged on the two opposite sides of the manifold block 110. Thus, the side surface area of the manifold block 110 can be fully used. Moreover, the connection oil pipe 300 does not need to bypass the electric control device 130, so that the connection oil pipe 300 is less likely to interfere with the electric control device 130. Thus, the length of the connection oil pipe 300 can be reduced, and the entire size of the vehicle brake system 1 can be reduced.

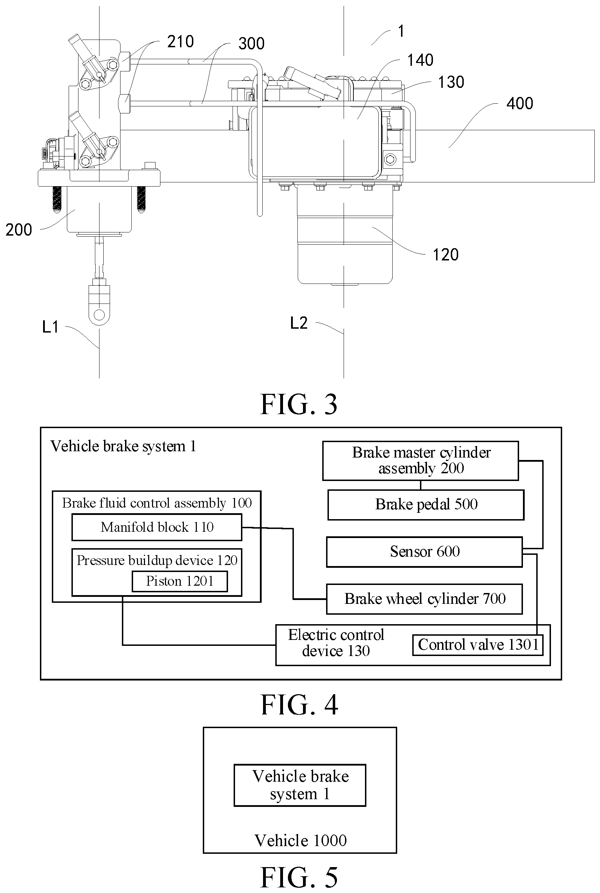

A vehicle 1000 according to the embodiments of the present disclosure is described below with reference to FIG. 5. The vehicle 1000 includes the vehicle brake system 1 according to any embodiment above of the present disclosure.

The vehicle 1000 according to the embodiments of the present disclosure uses the vehicle brake system 1 according to the above embodiment of the present disclosure, and thus has advantages such as a short pipeline length, low resistance to the brake fluid flow, and minimal space required for arrangement.

Other configurations and operations of the vehicle brake system 1 and the vehicle having same according to the embodiments of the present disclosure are known to those of ordinary skill in the art, and are not described in detail herein.

In the descriptions of the description, the descriptions with reference to the terms "an embodiment", "some embodiments", "an illustrative embodiment", "an example", "a specific example", "some examples", etc. indicate that specific characteristics, structures, materials, features, etc. described with reference to the embodiment or example are included in at least one embodiment or example of the present disclosure. In the description, exemplary descriptions of the above terms do not necessarily refer to a same embodiment or example.

Although the embodiments of the present disclosure have been shown and described, those of ordinary skill in the art can understand that various changes, modifications, replacements, and variations can be made to the embodiments without departing from the principles and spirit of the present disclosure, and the scope of the present disclosure is defined by the claims and their equivalents.

## Claims

1. A vehicle brake system (1), comprising:
a brake fluid control assembly (100), the brake fluid control assembly (100) comprising:
a manifold block (110);
a pressure build-up device (120), the pressure build-up device (120) being mounted on the manifold block (110); and
a brake master cylinder assembly (200), the brake master cylinder assembly (200) being in communication with the manifold block (110), and both the brake master cylinder assembly (200) and the pressure build-up device (120) driving brake fluid to be output via the manifold block (110);
wherein a central axis of the brake master cylinder assembly (200) is arranged at a non-perpendicular angle to an axis along a movement direction of a piston of the pressure build-up device (120).

2. The vehicle brake system (1) according to claim 1, wherein the central axis of the brake master cylinder assembly (200) is parallel to or coincides with the axis along the movement direction of the piston of the pressure build-up device (120).

3. The vehicle brake system (1) according to claim 2, wherein the brake master cylinder assembly (200) and the brake fluid control assembly (100) are spaced apart along a predetermined direction, and the predetermined direction is perpendicular to the central axis of the brake master cylinder assembly (200) and the axis along the movement direction of the piston of the pressure build-up device (120).

4. The vehicle brake system (1) according to claim 2 or 3, wherein the axis along the movement direction of the piston of the pressure build-up device (120) is arranged parallel to a thickness direction of the manifold block (110).

5. The vehicle brake system (1) according to any one of claims 1 to 4, wherein the brake master cylinder assembly (200) and the brake fluid control assembly (100) are arranged in a split configuration.

6. The vehicle brake system (1) according to any one of claims 1 to 5, further comprising:
a brake pedal (500), the brake pedal (500) being in transmission connection to the brake master cylinder assembly (200);
a sensor (600), the sensor (600) being electrically connected to the pressure build-up device (120), and the sensor (600) being configured to detect a movement change of the brake pedal (500); and
a brake wheel cylinder (700), the brake wheel cylinder (700) being in communication with the manifold block (110), and the brake wheel cylinder (700) being configured to receive the brake fluid output by the manifold block (110).

7. The vehicle brake system (1) according to claim 6, wherein the brake fluid control assembly (100) further comprises:
an electric control device (130), the electric control device (130) being mounted on the manifold block (110), the electric control device (130) being provided with a control valve (1301), the sensor (600) being electrically connected to the pressure build-up device (120) through the control valve (1301), and the control valve (1301) controlling whether the pressure build-up device (120) drives the brake fluid to be output via the manifold block (110) according to a detection signal of the sensor (600).

8. The vehicle brake system (1) according to any one of claims 1 to 7, further comprising:
an oil supply device (140), the oil supply device (140) being mounted on a top surface of the manifold block (110) and configured to supply the brake fluid to the pressure build-up device (120), and a bottom surface of the manifold block (110) being suitable for being connected to a vehicle body of a vehicle.

9. The vehicle brake system (1) according to any one of claims 1 to 8, further comprising:
a connection oil pipe (300), the manifold block (110) being provided with a fluid inlet (111), the brake master cylinder assembly (200) being provided with a first fluid outlet (210), the connection oil pipe (300) being in communication with the fluid inlet (111) and the first fluid outlet (210) separately, and the fluid inlet (111) being arranged on a side surface of the manifold block (110).

10. The vehicle brake system (1) according to claim 9, wherein the first fluid outlet (210) is arranged on a circumferential surface of the brake master cylinder assembly (200), and the first fluid outlet (210) is located on one side of the brake master cylinder assembly (200) facing the brake fluid control assembly (100).

11. The vehicle brake system (1) according to claim 10, wherein both the central axis of the brake master cylinder assembly (200) and the axis along the movement direction of the piston of the pressure build-up device (120) extend along a length direction of the vehicle body of the vehicle;
the brake master cylinder assembly (200) and the brake fluid control assembly (100) are distributed along a width direction of the vehicle body; or,
the brake master cylinder assembly (200) and the brake fluid control assembly (100) are distributed along a height direction of the vehicle body, and the brake master cylinder assembly (200) is located directly above the brake fluid control assembly (100).

12. The vehicle brake system (1) according to any one of claims 9 to 11, wherein the manifold block (110) is provided with a second fluid outlet (112), the second fluid outlet (112) being in communication with the fluid inlet (111), and a central axis of the second fluid outlet (112) being arranged parallel to the axis along the movement direction of the piston of the pressure build-up device (120).

13. The vehicle brake system (1) according to claim 12, wherein the pressure build-up device (120) is a piston pump, the piston pump being provided with a motor (121), the motor (121) being mounted on the manifold block (110), and the motor (121) and the second fluid outlet (112) being located on a same side surface of the manifold block (110).

14. The vehicle brake system (1) according to claim 13, wherein the brake fluid control assembly (100) further comprises:
the electric control device (130), the electric control device (130) being mounted on the manifold block (110), the electric control device and the motor (121) being arranged on two opposite sides of the manifold block (110) respectively, and the electric control device (130) being connected to the piston pump.

15. A vehicle (1000), comprising: the vehicle brake system (1) according to any of claims 1 to 14.
